# EUROPÄISCHE PATENTANMELDUNG

(11) **EP 3 296 045 A1**
(43) Veröffentlichungstag der Anmeldung: **21.03.2018**
(21) Anmeldenummer: 17191428.6
(22) Anmeldetag: 15.09.2017
(51) Int. Cl.: B23B 51/00, B23B 49/00, B28D 1/14

(54) **BOHRER**

(30) Priorität: 19.09.2016 DE 102016117609
(71) Anmelder: DreBo Werkzeugfabrik GmbH, D-88361 Altshausen (DE)
(72) Erfinder: Stumpp, Martin, 88214 Ravensburg (DE); Zürn, Alexander, 88361 Altshausen (DE); Scheck, David, 88250 Weingarten (DE); Eggers, Rainer, 88356 Ostrach (DE)
(74) Vertreter: Baronetzky, Klaus

(57) **Zusammenfassung**

Die Erfindung betrifft einen Bohrer (100) mit einem Bohrkopf (10) und einem Schaft (30), zwischen denen sich ein Kraftübertragungselement (20) erstreckt. Über das Kraftübertragungselement sind auf den Schaft eingeleitete Kräfte mindestens teilweise zum Bohrerkopf übertragbar. Das Kraftübertragungselement weist mindestens eine, bevorzugt mindestens zwei, Markierungen (2, 4) an einer radial nach außen weisenden Fläche des Kraftüber tragungselements auf, die beim Drehen des Kraftübertragungselements sichtbar ist.

## Beschreibung

Während eines Bohrvorgangs nimmt die Tiefe eines Bohrlochs typischerweise im Wesentlichen gleichmäßig zu. Der Bohrfortschritt ist jedoch i.d.R. nicht konstant, z.B. bei Einlagungen in Beton.

Bohrlöcher werden üblicherweise für die anschließende Montage von Dübeln verwendet. Ein handelsüblicher Schraubdübel weist in der Regel einen festen Dübelschaft, dessen axiale Länge 20 % bis 40 % der Länge des Schraubdübels beträgt, und einen spreizbaren Spreizbereich auf. Beim Eindrehen der Schraube in den Schraubdübel spreizt sich der spreizbare Spreizbereich des Dübels. Durch den Formschluss zwischen dem gespreizten Spreizbereich und dem umgebenden Material sowie den Kraftschluss ist die Schraube gegen Herausziehen gesichert.

Beim Bohren z.B. in Mauerwerk aus Ziegeln, die zur Gewichtsverminderung und zur Verringerung der Wärmeleitfähigkeit Löcher aufweisen, ist zu beachten, dass die Tiefe des Bohrlochs der Länge des Schraubdübels entsprechen sollte. Die Löcher der Ziegel befinden sich in der Regel innnerhalb der Ziegel und 5 bis 30 mm beabstandet von der Oberfläche der Ziegel. Bei richtiger Montage eines Dübels sollte sein fester Dübelschaft bündig mit dem Mauerwerk angeordnet sein und sein spreizbarer Spreizbereich zugleich gezielt in den Löchern des Ziegels aufgespreizt und dort als Hinterschneidung wirken.

Wenn das Bohrloch aber versehentlich tiefer als die Länge des einzusetzenden Schraubdübels gebohrt würde, würde der Dübel durch den Druck des Schraubwerkzeugs über die Schraube in eine tiefere Position des Bohrlochs gedrückt. In diesem Fall ist der feste Dübelschaft des Dübels im Bereich der Löcher des Ziegels angeordnet, was dazu führt, dass der Dübel beim Eindrehen der Schraube durchdreht, so dass das Bohrloch unbrauchbar wird.

Zur Erledigung dieses Problems werden seit langem Bohrer mit Tiefenanschlag zur Verfügung gestellt. Ein Tiefenanschlag ist in der Regel stangenförmig. Beim Bohren ist der Tiefenanschlag an dem Bohrerkörper parallel zu der Bohrrichtung angeordnet. Das vorderste Ende des Tiefenanschlags fluchtet radial mit der Stelle des Bohrers, die der Länge des einzusetzenden Dübels entspricht. Wenn der Bohrer im Bohrloch bis zur Tiefe entsprechend der Länge des einzusetzenden Dübels eingedrungen ist, stößt der Tiefenanschlag an die Mauer. Dadurch wird der Monteur darüber informiert, dass der Bohrvorgang fertiggestellt ist.

Jeoch besteht bei Verwendung eines Tiefenanschlags der Nachteil, dass aufgrund des mehrmaligen Stoßens des Tiefenanschlags an der Mauer durch den Schlagbohrvorgang Dellen an der Oberfläche der Mauer hintergelassen werden, was die Nachbearbeitung erfordert.

Eine Lösung dafür ist bisher nicht bekannt.

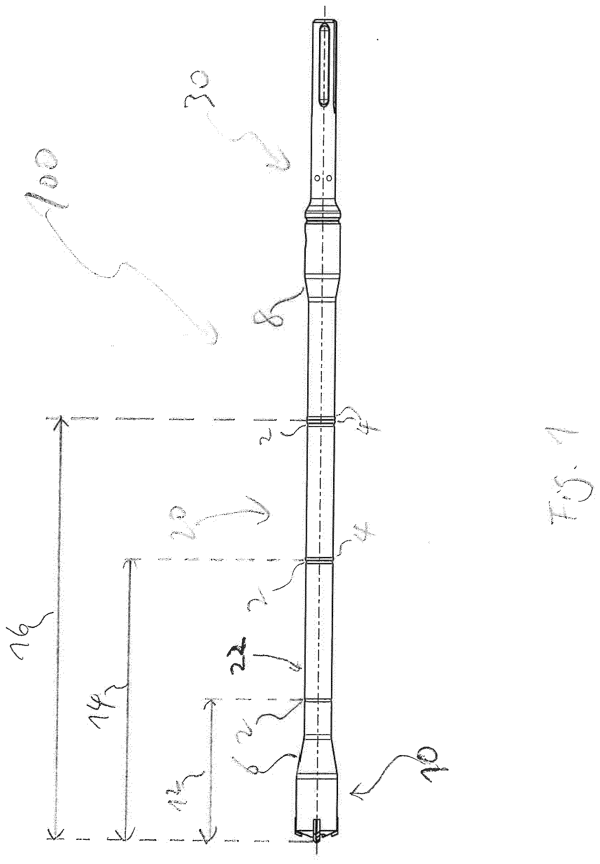

Die Druckschrift US 2008/0051793 A1 offenbart ein Bohrwerkzeug mit einem Gewindebohrteil, der an einem Ende mit einem Schaft in an sich bekannter Weise verbunden ist. An etwa der Mitte dieses Schafts sind gemäß der dortigen Fig. 1 zwei Nuten mit einer kodierten Farbe vorgesehen, die eine bestimmte Größe des Werkzeugs bedeutet. Alternativ sind am Schaft Ätzungen vorgesehen, die die Größe des Werkzeugs darstellen. Während des Bohrvorgangs ist jedoch für den Bediener des Werkzeugs nur möglich, in einer groben Weise das Längenverhältnis des außerhalb des Bohrlochs befindlichen Schaftteils und des gesamten Schafts einzuschätzen und dann basierend auf der Größe des Bohrwerkzeugs die Tiefe des Bochlochs zu berechnen.

Demgegenüber liegt der Erfindung die Aufgabe zugrunde, einen Bohrer gemäß dem Oberbegriff von Anspruch 1 zu schaffen, der eine einfache und verbesserte Steuerung des Bohrvorgangs ermöglicht.

Diese Aufgabe wird erfindungsgemäß durch Anspruch 1 gelöst. Vorteilhafte Weiterbildungen ergeben sich aus den Unteransprüchen.

Erfindungsgemäß ist vorgesehen, dass ein Kraftübertragungselement, das sich zwischen einem Bohrkopf und einem Schaft des erfindungsgemäßen Bohrers erstreckt, mindestens eine, bevorzugt mindestens zwei, Markierungen an einer radial nach außen weisenden Fläche des Kraftübertragungselements aufweist, die beim Drehen des Kraftübertragungselements sichtbar ist.

Die Markierung bzw. Markierungen funktioniert bzw. funktionieren erfindungsgemäß als eine Tiefenstandsanzeige für das Bohrloch. Jede Markierung steht für eine bestimmte vorgegebene Länge von der Stelle der Markierung bis zum axial vordersten Ende des Bohrkopfs. Wenn beim Bohrvorgang die Arbeitsfläche, an der sich die Lochöffnung befindet, mit der Markierung radial fluchtet, entspricht erfindungsgemäß die vorgegebene Länge der aktuelle Tiefe des Bohrlochs.

Dadurch lässt sich erfindungsgemäß zum ersten Mal auch während des Bohrens einfach und präzise die aktuelle Tiefe des Bohrlochs erkennen.

Außerdem ist die erfindungsgemäße Auslegung der Markierung einfach und kostengünstig zu realisieren. In einer bevorzugten Ausführungsform ist die Markierung als umlaufender Ring ausgebildet, der visuell von dem Kraftübertragungselement im Übrigen abgesetzt ist.

In ähnlicher Weise ist in einer weiteren bevorzugten Ausführungsform die Markierung als Punkt ausgebildet, der beim Bohrvorgang, also beim Hochgeschwindigkeitsdrehen des Kraftübertragungselements, visuell als Ring von dem Kraftübertragungselement im Übrigen abgesetzt ist.

In einer weiteren bevorzugten Ausführungsform ist es vorgesehen, dass die Markierung die als Mantelfläche ausgebildete nach außen weisende Fläche des Kraftübertra gungselements unterbricht und insbesondere als Nut und/oder Rippe ausgebildet ist.

Bevorzugt weist die Rippe einen gleichen Außendurchmesser wie der Bohrkopf auf, so dass die radial nach außen weisende Fläche der Rippe als Führungsfläche beim Bohrvorgang dient.

Besonders bevorzugt weist die Rippe zum Erleichterung des Einsteckens in das Bohrloch an ihrer Führungsfläche einen konischen Verlauf auf. Die Gefahr, dass sich die Rippe bei der Führung des Bohrers verklemmt, wird überraschend aufgrund des konischen Verlaufs geringer.

In einer weiteren bevorzugten Ausführungsform ist es vorgesehen, dass die Markierung farblich gegenüber dem Kraftübertragungselement im Übrigen abgesetzt ist.

In einer weiteren bevorzugten Ausführungsform ist es vorgesehen, dass eine zwischen dem Bohrkopf und dem Schaft sich als Kraftübertragungselement erstreckende Stange als Vollzylinder bohrmehlabführnutenfrei ausgebildet sind.

In einer weiteren bevorzugten Ausführungsform ist es vorgesehen, dass an der nach außen weisenden Fläche des Kraftübertragungselements sich mindestens eine bevorzugt schwach ausgeprägte Bohrmehlabführnut spiralförmig erstreckt, die schräg zur Markierung angeordnet ist und insbesondere die Markierung unterbricht.

In einer weiteren bevorzugten Ausführungsform ist es vorgesehen, dass das Kraftübertragungselement einen geringeren Außendurchmesser als der Bohrkopf aufweist, insbesondere um mehr als 3 % geringer, bevorzugt um mehr als 5 % geringer als dieser.

Der Innendurchmesser des Bohrlochs wird durch den Außendurchmesser des Bohrkopfs bestimmt. Wenn der erfindungsgemäße Bohrer zum Betrieb an einem Bohrloch eingesetzt wird, besteht aufgrund des Außendurchmesserunterschieds zwischen dem Bohrkopf und dem Kraftübertragungselement ein Freiraum zwischen der Bohrlochwand und der nach außen weisende Fläche des Kraftübertragungselements.

In einer weiteren bevorzugten Ausführungsform ist es vorgesehen, dass zwischen dem Kraftübertragungselement und dem Bohrkopf mindestens ein Konus ausgebildet ist. Das Bohrmehl bewegt sich aufgrund der Förderimpulse entlang dem Konusteil zum Kraftübertragungselement hin.

In einer weiteren bevorzugten Ausführungsform ist es vorgesehen, dass zwischen dem Schaft und dem Kraftübertragungselement ein weiterer Konus ausgebildet ist.

In einer weiteren bevorzugten Ausführungsform ist es vorgesehen, dass mindestens zwei Markierungen an dem Kraftübertragungselement vorgesehen sind, die voneinander beabstandet und visuell voneinander unterscheidbar ausgebildet sind.

Die Markierungen können beispielsweise durch unterschiedliche Farben voneinander unterschieden werden. Alternativ kann eine Markierung als Nut und die andere als Rippe ausgebildet sein.

In einer weiteren bevorzugten Ausführungsform ist es vorgesehen, dass die Markierungen sich in ihrer Breite unterscheiden. Bevorzugt weist die dem Bohrkopf nähere Markierung eine geringere Breite als die von dem Bohrkopf entferntere Markierung auf. Je entfernter sich eine Markierung also vom Bohrkopf befindet, desto breiter ist die Markierung.

Bei der Betrachtung während des Bohrvorgangs, ob die Lochöffnung mit einer Markierung fluchtet, sollte die zu betrachtende Stelle der Markierung ihre radiale Mittelachse sein. Dies ist insbesondere wichtig für eine breitere Markierung, bei der unterschiedliche Betrachtungsstellen der Markierung unübersehbare Fehler bezüglich der Lochtiefe verursachen können.

In einer verbesserten Ausführungsform ist es vorgesehen, dass die zu betrachtende Stelle der Markierung diejenige sein sollte, die am nächsten beabstandet von dem Bohrkopf angeordnet ist. Damit spielt die Breite einer Markierung bei der Betrachtung keine Rolle.

In einer weiteren bevorzugten Ausführungsform ist es vorgesehen, dass die erste Markierung von der zweiten Markierung so weit beabstandet ist wie der Bohrkopf von der ersten Markierung. In diesem Fall bedeutet die Stelle der zweiten Markierung eine doppelte Tiefe des Bohrlochs gegenüber der Stelle der ersten Markierung.

In einer weiteren bevorzugten Ausführungsform ist es vorgesehen, dass mindestens drei Markierungen voneinander beabstandet über den Verlauf des Kraftübertragungselements vorgesehen sind, die sich voneinander insbesondere in einem regelmäßigen Abstand erstrecken.

Man kann daher sehr schnell die aktuelle Tiefe des Bohrlochs erkennen, indem man lediglich die während des Bohrvorgangs in das Bohrloch eintretenden Markierungen zählt.

In einer weiteren bevorzugten Ausführungsform ist es vorgesehen, dass jede Markierung aus mindestens einer, und abgesehen von einer Markierung, aus je mindestens zwei Einzelmarkierungen besteht, und dass die Anzahl der Einzelmarkierungen pro Markierung mit dem Abstand der Markierung von dem Bohrkopf zunimmt.

Bei dieser Ausführungsform ist es besonders vorteilhaft, dass man jederzeit während des Bohrvorgangs nur die am nächsten an der Lochöffnung befindliche Markierung zu beachten braucht, um die Anzahl ihrer Einzelmarkierungen zu ermitteln. Denn jede Anzahl der Einzelmarkierungen entspricht einer vorbestimmten Lochtiefe.

In einer weiteren bevorzugten Ausführungsform ist es vorgesehen, dass die Markierung oder die Markierungen sich, betrachtet über den Verlauf des Kraftübertragungselements, insbesondere an ihrem dem Kraftübertragungselement benachbarten Ansatz, schräg zur Achse des Bohrers von der Mantelfläche des Kraftübertragungselements weg erstrecken und insbesondere in einem Winkel, der 60° oder weniger beträgt.

Bevorzugt unterscheiden die Markierungen sich in ihrer Steigung zur axialen Achse des Bohrers. Beispielsweise weist die dem Bohrkopf nähere Markierung einen größeren Steigungswinkel zur axialen Achse des Bohrers als die von dem Bohrkopf entferntere Markierung auf.

In einer weiteren bevorzugten Ausführungsform ist es vorgesehen, dass mindestens eine Fläche einer Markierung als Stützfläche für einen Tiefenanschlag wirkt, der sich von der Markierung in Richtung Bohrkopf erstreckt.

Weitere Vorteile, Einzelheiten und Merkmale ergeben sich aus der nachstehenden Beschreibung von Ausführungsbeispielen der Erfindung anhand der Zeichnungen.

Es zeigen:
- Fig. 1: eine schematisch dargestellte Ausführungsform des erfindungsgemäßen Bohrers;
- Fig. 2: eine weitere schematisch dargestellte Ausführungsform des erfindungsgemäßen Bohrers;
- Fig. 3: eine weitere schematisch dargestellte Ausführungsform des erfindungsgemäßen Bohrers; und
- Fig. 4: eine weitere schematisch dargestellte Ausführungsform des erfindungsgemäßen Bohrers.

Die in Fig. 1 schematisch dargestellte Ausführungsform des erfindungsgemäßen Bohrers 100 weist einen Bohrkopf 10, einen Schaft 30 und ein Kraftübertragungselement 20 auf, das sich zwischen dem Bohrkopf 10 und dem Schaft 30 erstreckt.

Das Kraftübertragungselement 20 ist stangenförmig ausgebildet und weist in der gemäß Fig. 1 dargestellten Ausführungsform drei Markierungen an einer radial nach außen weisenden Fläche des Kraftübertragungselements 20 auf. Die drei Markierungen sind beim Drehen des Kraftübertragungselements 20 sichtbar.

Die drei Markierungen weisen je eine Einzelmarkierung auf, die als Nut 2 ausgebildet ist, die die als Mantelfläche ausgebildete, nach außen weisende Fläche des Kraftübertragungselements 20 unterbricht.

Die mittlere Markierung besteht zusätzlich aus einer Einzelmarkierung als Rippe 4, und die Markierung nah dem Schaft 30 weist zwei zusätzliche Rippen 4 auf. Die Rippe bzw. Rippen 4 ist bzw. sind der Nut 2 eng benachbart angeordnet.

Durch eine derartige Auslegung, dass vom Bohrkopf 10 nach dem Schaft 30 hin die Anzahl der als Rippe 4 ausgebildeten Einzelmarkierungen zunimmt, erkennt man erfindungsgemäß einfach und schnell, an welcher Markierung sich die Bochlochöffnung im Moment befindet, und weißt man dann basierend auf dem vorbestimmten Tiefenwert entsprechend jeder Markierung schnell den Tiefenstand des Bochlochs.

In der gemäß Fig. 1 dargestellen Ausführungsform ist die erste Markierung von der zweiten Markierung so weit beabstandet wie der Bohrkopf 10 von der ersten Markierung; die zweite Markierung ist von der dritten Markierung ebenfalls so weit beabstandet wie die erste Markierung von der zweiten Markierung. Insofern ergeben sich drei gleiche Abstände vom Bohrkopf 10 bis zur dritten Markierung.

Jeder der Abstände entspricht einer vorgegebenen Länge L. Der Abstand 12 zwischen dem Bohrkopf 10 und der ersten Markierung beträgt also das Einfache von L; der Abstand 14 zwischen dem Bohrkopf 10 und der zweiten Markierung beträgt das Zweifache von L; der Abstand 16 zwischen dem Bohrkopf 10 und der dritten Markierung beträgt das Dreifache von L. Je nachdem, an welcher Markierung sich die Bohrlochöffnung befindet, erkennt man mit der vorgegebenen Länge L schnell die Tiefe des Bohrlochs.

Das Kraftübertragungselement 20 weist gemäß Fig. 1 einen geringeren Außendurchmesser als der Bohrkopf 10 auf, um etwa 10 % geringer.

Wenn der erfindungsgemäße Bohrer 100 an einem zu erstellenden Bohrloch eingesetzt wird, besteht aufgrund des Außendurchmesserunterschieds zwischen dem Bohrkopf 10 und dem Kraftübertragungselement 20 ein Freiraum 22 zwischen der Bohrlochwand und der nach außen weisenden Fläche des Kraftübertragungselements 20. Überraschend steht mit dem Freiraum 22 Bohrmehl weniger unter Druck als ohne den Freiraum 22.

Zwischen dem Kraftübertragungselement 20 und dem Bohrkopf 10 ist ein Konus 6 vorgesehen. Das während des Bohrvorgangs entstehende Bohrmehl bewegt sich aufgrund der Förderimpulse entlang dem Konusteil 6 zum Kraftübertragungselement 20 hin. Überraschend ist dadurch die Gefahr der Verstopfung von Bohrmehl an der Stelle zwischen dem Bohrkopf 10 und dem Kraftübertragungselement 20 deutlich geringer.

Zwischen dem Schaft 30 und dem Kraftübertragungselement 20 ist ebenfalls ein weiterer Konus 8 vorgesehen.

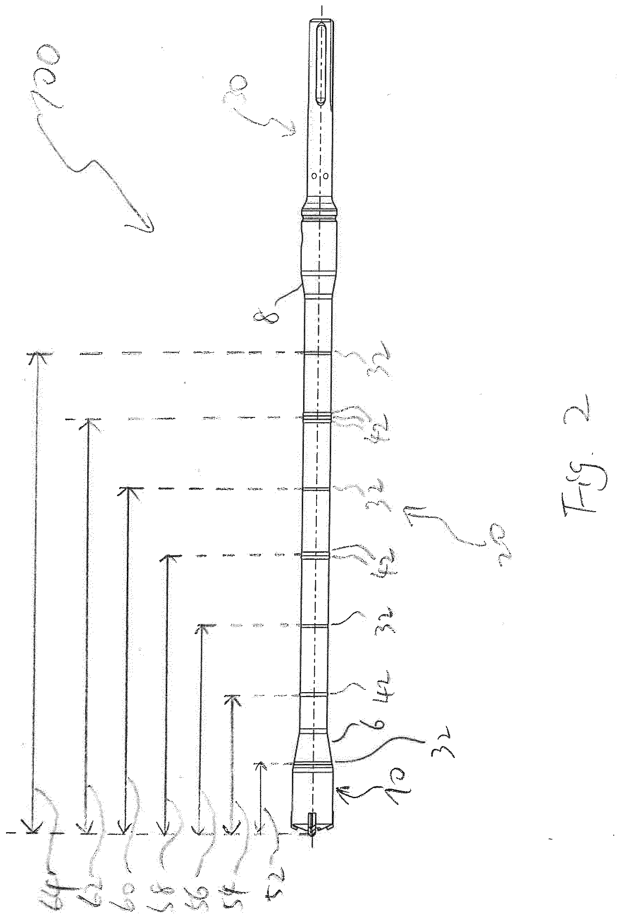

Fig. 2 zeigt eine Ausführungsform mit Markierungen, die sich unter anderem in ihrer Breite unterscheiden. In dieser Ausführungsform sind insgesamt sieben Markierungen vorgesehen. Jede Markierung ist von der benachbarten Markierung so weit beabstandet wie der Bohrkopf von der ersten Markierung. Die erste, dritte, fünfte und siebte Markierungen sind als Ring 32 und die zweite, vierte, sechste Markierungen sind als Rippe bzw. Rippen 42 ausgebildet, wobei die als Ring 32 ausgebildeten Markierungen etwa halb so breit sind wie die als Rippe 42 ausgebildeten Einzelmarkierungen.

Ähnlich wie die Ausführungsform gemäß Fig. 1 nimmt in der gemäß Fig. 2 dargestellten Ausführungsform die Anzahl der als Rippe 42 ausgebildeten Einzelmarkierungen vom Bohrkopf 10 nach dem Schaft 30 hin zu.

Der Ring 32 und die Rippe bzw. Rippen 42 sind abwechselnd an dem Kraftüber tragungselement 20 angeordnet. Der Abstand 52 zwischen dem Bohrkopf 10 und dem ersten Ring 32 beträgt eine vorgegebene Länge a/2; der Abstand 54 zwischen dem Bohrkopf 10 und der ersten Rippe 32 beträgt die Länge a; die Abstände 56, 58, 60, 62 und 64 sind je a/2 länger als der Abstand zwischen dem Bohrkopf 10 und der zum Bohrkopf hin entsprechenden nächsten Markierung.

Mit der abwechselnden Anordnung des Rings 32 und der Rippe 42 und der abwechselnden Anordnung zwei unterschiedlicher Breiten sowie die Zunahme der Anzahl der Rippe 42 kann man erfindungsgemäß in einer einfachen Weise die betreffende Markierung erkennen und hiervon einfach die entsprechende Tiefe des Bohrlochs ableiten.

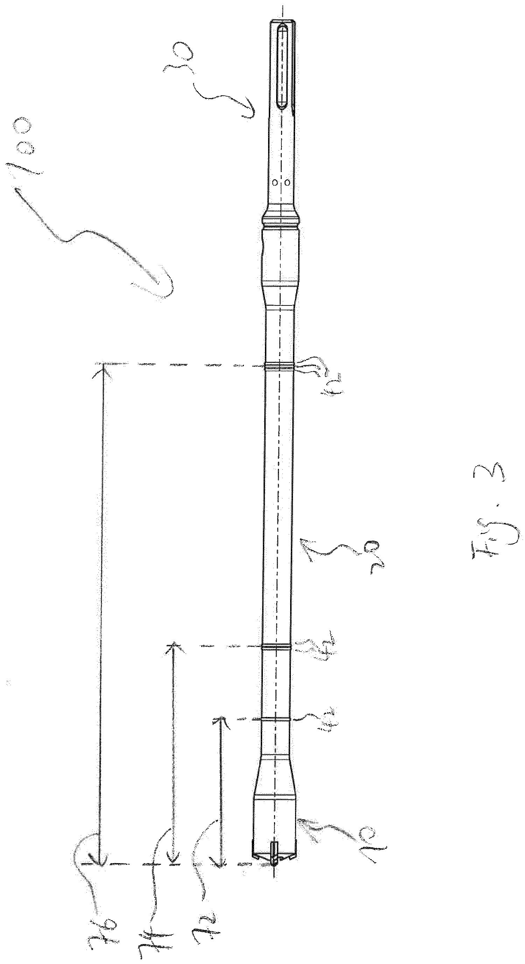

In Fig. 3 ist eine weitere Ausführungsform mit drei Markierungen am Kraftübertragungselement 20 dargestellt. Die drei Markierungen bestehen aus als Rippe 42 ausgebildeten Einzelmarkierungen. Die Anzahl der Rippen 42 nimmt bei jeder Markierung zum Schaft 30 hin zu.

Die vorstehend genannten Bohrlochtiefen, die je für die passgenaue Montage von Dübeln geeignet sind, werden erfindungsgemäß einfach und kostengünstig durch diese Ausführungsform ermöglicht.

Die Abstände 72, 74, 76 jeweils zwischen der ersten Markierung, der zweiten Markierung, der dritten Markierung und dem Bohrkopf 10 entsprechen je einer vorbestimmten Tiefe, die bevorzugt einer bestimmten Dübellänge entspricht. In diesem Fall sollte der Bohrvorgang bis zu der betreffenden Markierung zum Ende kommen, damit anschließend die Verankerung eines geeigneten Dübels vorgenommen wird.

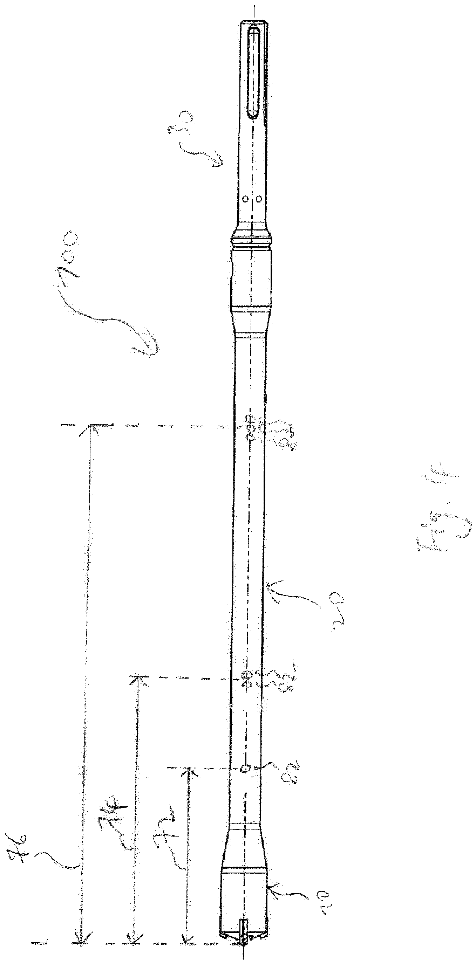

Fig. 4 zeigt eine alternative Ausführungsform der in Fig. 3 dargestellten Ausführungsform. Die Einzelmarkierungen der in Fig. 3 dargestellten Ausführungsform, also die Rippen 42, werden gemäß Fig. 4 je durch einen Punkt 82 ersetzt. Beim Bohren drehen sich die Punkte 82 mit und sind visuell als Ringe von dem Kraftübertragungselement 20 im Übrigen abgesetzt.

In einer nicht in den Figuren dargestellen Ausführungsform ist es vorgesehen, dass die Rippen einen gleichen Außendurchmesser wie der Bohrkopf 10 aufweisen, so dass die radial nach außen weisende Fläche der Rippen als Führungsfläche beim Bohrvorgang dient.

In einer weiteren nicht in den Figuren dargestellen Ausführungsform ist es vorgesehen, dass die Rippen zum Erleichterung des Einsteckens in das Bohrloch an ihrer Führungsfläche einen konischen Verlauf aufweisen. Überraschend wird die Gefahr, dass sich die Rippen bei der Führung des Bohrers 100 verklemmen, aufgrund des konischen Verlaufs der Rippen geringer.

## Patentansprüche

1. Bohrer, mit einem Bohrkopf (10) und einem Schaft (30), zwischen denen sich ein Kraftübertragungselement (20) erstreckt, über welches auf den Schaft (30) eingeleitete Kräfte mindestens teilweise zum Bohrerkopf (10) übertragbar sind, **dadurch gekennzeichnet, dass** das Kraftübertragungselement (20) mindestens eine, bevorzugt mindestens zwei, Markierungen an einer radial nach außen weisenden Fläche des Kraftübertragungselements (20) aufweist, die beim Drehen des Kraftübertragungselements (20) sichtbar ist.

2. Bohrer nach einem der vorhergehenden Ansprüche, **dadurch gekennzeichnet, dass** eine sich zwischen dem Bohrkopf (10) und dem Schaft (30) als Kraftübertragungselement (20) erstreckende Körper als Vollzylinder oder als Hohlzylinder bohrmehlabführnutenfrei ausgebildet ist.

3. Bohrer nach einem der vorhergehenden Ansprüche, **dadurch gekennzeichnet, dass** ein sich zwischen Bohrkopf (10) und Schaft (30) erstreckendes Kraftübertragungselement (20) einen geringeren Außendurchmesser als der Bohrkopf (10) aufweist, insbesondere um mehr als 3 % geringer, bevorzugt um mehr als 5 % geringer als dieser.

4. Bohrer nach einem der vorhergehenden Ansprüche, **dadurch gekennzeichnet, dass** zwischen dem Kraftübertragungselement (20) und dem Schaft (30) mindestens ein Konus (6) ausgebildet ist und insbesondere zwischen dem Bohrkopf (10) und dem Kraftübertragungselement (20) ein weiterer Konus (8).

5. Bohrer nach einem der vorhergehenden Ansprüche, **dadurch gekennzeichnet, dass** mindestens eine Markierung als umlaufender Ring (32) ausgebildet ist, der visuell von dem Kraftübertragungselement (20) im Übrigen abgesetzt ist.

6. Bohrer nach einem der vorhergehenden Ansprüche, **dadurch gekennzeichnet, dass** mindestens eine Markierung die als Mantelfläche ausgebildete nach außen weisende Fläche des Kraftübertragungselements (20) unterbricht und insbesondere als Nut (2) und/oder Rippe (4, 42) ausgebildet ist.

7. Bohrer nach einem der vorhergehenden Ansprüche, **dadurch gekennzeichnet, dass** mindestens eine Markierung farblich gegenüber dem Kraftübertragungselement (20) im Übrigen abgesetzt ist.

8. Bohrer nach Anspruch 7, **dadurch gekennzeichnet, dass** mindestens zwei farblich unterschiedliche Markierungen an unterschiedlichen axialen Stellen des Kraftübertragungselements vorgesehen sind.

9. Bohrer nach einem der vorhergehenden Ansprüche, **dadurch gekennzeichnet, dass** mindestens zwei Markierungen an dem Kraftübertragungselement (20) vorgesehen sind, die voneinander beabstandet und visuell voneinander unterscheidbar ausgebildet sind.

10. Bohrer nach Anspruch 9, **dadurch gekennzeichnet, dass** die Markierungen sich in ihrer Breite unterscheiden und insbesondere die dem Bohrkopf (10) nähere Markierung eine geringere Breite als die von dem Bohrkopf (10) entferntere Markierung aufweist.

11. Bohrer nach einem der vorhergehenden Ansprüche, **dadurch gekennzeichnet, dass** mindestens drei Markierungen voneinander beabstandet über den Verlauf des Kraftübertragungselements (20) vorgesehen sind, die sich voneinander insbesondere in einem regelmäßigen Abstand erstrecken.

12. Bohrer nach einem der vorhergehenden Ansprüche, **dadurch gekennzeichnet, dass** jede Markierung aus mindestens einer, und abgesehen von einer Markierung, aus je mindestens zwei Einzelmarkierungen (2, 4, 32, 42) besteht bzw. bestehen, und dass die Anzahl der Einzelmarkierungen (4, 42) pro Markierung mit dem Abstand der Markierung von dem Bohrkopf (10) zunimmt.

13. Bohrer nach einem der vorhergehenden Ansprüche, **dadurch gekennzeichnet, dass** die Markierungen in regelmäßigen Abständen voneinander angeordnet sind und einen regelmäßigen Abstand zueinander aufweisen.

14. Bohrer nach einem der vorhergehenden Ansprüche, **dadurch gekennzeichnet, dass** die Markierungen in ihrer radialen Erstreckung unterschiedlich zueinander sind und insbesondere die radiale Erstreckung der Markierungen in Schaft-Richtung gesehen abnimmt.

15. Bohrer nach einem der vorhergehenden Ansprüche, **dadurch gekennzeichnet, dass** mindestens eine Fläche einer Markierung als Stützfläche für einen Tiefenanschlag wirkt, der sich von der Markierung in Richtung Bohrkopf (10) erstreckt.
